# EUROPEAN PATENT SPECIFICATION

(11) **EP 1 244 584 B1**
(45) Date of publication and mention of the grant of the patent: **31.08.2005**
(21) Application number: 01906389.0
(22) Date of filing: 03.01.2001
(51) Int. Cl.: B62D 33/067

(54) **HYDRAULIC TILTING DEVICE FOR TILTING A VEHICLE CAB**
HYDRAULIKANLAGE ZUM KIPPEN EINER FAHRERKABINE
DISPOSITIF HYDRAULIQUE D'INCLINAISON PERMETTANT D'INCLINER UNE CABINE DE VEHICULE

(30) Priority: 06.01.2000 NL 1014029
(43) Date of publication of application: 02.10.2002
(73) Proprietor: Actuant Corporation, Glendale, Wisconsin 53209-3703 (US)
(72) Inventor: OUDELAAR, Tone, NL-7576 CA Oldenzaal (NL)
(74) Representative: Brookhuis, Hendrik Jan Arnold
(86) International application number: PCT/NL2001/000001
(87) International publication number: WO 2001/049555

(56) References cited:
- EP-A- 0 586 968
- US-A- 4 174 016

## Description

According to a first aspect, the present invention relates to a hydraulic tilting device for tilting a cab of a vehicle between a driving position and a tilted position, according to the preamble of claim 1.

It is generally known from the prior art for a cab of a (motor) vehicle to be tiltably connected, via hinge means, to the chassis of the vehicle, so that, in this way, the cab can be tilted between a driving position, in which the vehicle can be driven, and a tilted position, in which, for example, maintenance work can be carried out on the engine which lies beneath the cab. Furthermore, it is generally known for a tiltable cab of this nature, in the driving position, to be spring-supported on the chassis in order to improve the comfort of the occupants of the cab, in particular the driver, during driving.

To tilt a spring-mounted cab of this type, hydraulic tilting devices according to the preamble of claim 1 are known, for example from GB 2 079 378 and EP 0 586 968 A, the last disclosing a device according the preamble of claim 1, with one or more tilting cylinders which are arranged between the chassis and the tiltable cab. To prevent the tilting cylinder from interfering with the sprung movement of the cab with respect to the chassis, the cab-tilting device in a vehicle of this type has a "lost-motion mode".

In the lost-motion mode of these known tilting devices, the pump is out of action and the piston is situated between the two ports of the bypass channel.

If it is desired for the cab to be tilted forwards, pressurized hydraulic fluid is fed to the push connection of the tilting cylinder by means of the pump. In the process, the second nonreturn valve closes off that part of the bypass channel which, at the start of tilting, is in communication with the pulling chamber of the tilting cylinder.

When the piston/piston rod assembly has been pushed out to beyond the "lost-motion range" and the two ports of the bypass channel open into the pushing chamber of the tilting cylinder, the first nonreturn valve provides a "holding function", i.e. the tilting cylinder is protected against undesirable retraction thereof, for example if the pump is stopped when the cab is in a position in which it has not yet been tilted completely forwards and the cab is then supported on the tilting cylinder(s).

In the tilting device which is known from GB 2 079 378, the first and second nonreturn valves are completely separate.

In DE 42 29 842 there is a type of integration of the two nonreturn valves. In this case, an internal passage, which forms part of the bypass channel, is formed in the valve body of the first nonreturn valve. Furthermore, the second nonreturn valve is accommodated in the valve body of the first nonreturn valve. This is because the valve body of the first nonreturn valve forms a seat around the internal passage therein, against which a second valve body, which can move in a reciprocating manner in the internal passage, can bear in a sealed manner.

The abovementioned tilting devices which are known from GB 2 079 387 and DE 42 29 842 have the drawback that there is a risk of the second nonreturn valve - after the cab has been tilted back - continuing to keep the bypass channel closed while the tilting device is in the lost-motion mode. This blocking of the bypass channel disrupts the lost-motion action of the device.

Another drawback of the known tilting devices is that their production requires undesirably great effort and in particular requires numerous accurate machining operations, for example in order to produce the required sealing action of the nonreturn valves and to ensure that the tilting device functions reliably throughout its entire service life.

It is an object of the present invention to eliminate the abovementioned drawbacks.

The present invention achieves this object by providing a tilting device according to claim 1. The single, common valve body therefore forms both the valve body of the first nonreturn valve and the valve body of the second nonreturn valve. The single valve body is preferably a ball.

The two seats may be arranged opposite one another, as described in claim 2, which arrangement is simple to implement in practice and allows considerable savings with regard to the number of machining operations. However, the invention also allows the chamber to have a curved shape (for example an L or U shape) or one seat to be formed at one axial end of the chamber and another seat to be formed in the peripheral wall of the chamber.

The device of claim 1 is also suitable for other applications, for example for hydraulic actuating devices for actuating components of a covering roof assembly of a motor vehicle.

An advantageous embodiment of the tilting device according to the invention will be described below with reference to the drawing, in which:
Fig. 1 diagrammatically depicts the tilting cylinder and associated nonreturn valves of the tilting cylinder according to the invention, and
Fig. 2 shows a cross section through part of an exemplary embodiment of the tilting cylinder according to the invention in which the diagram shown in Figure 1 is implemented.

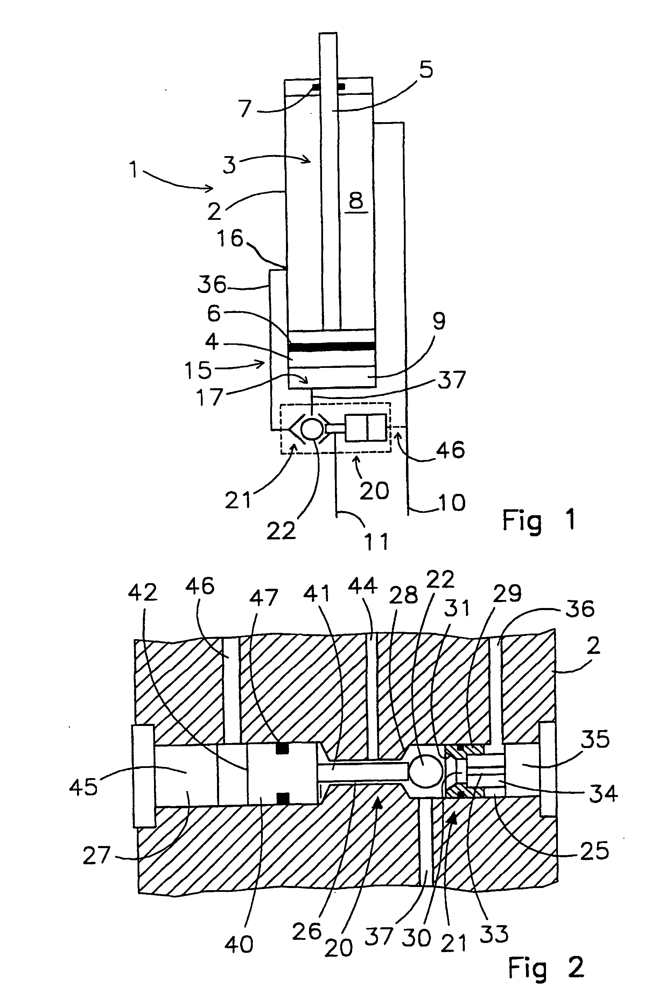

The hydraulic tilting cylinder 1 which is diagrammatically depicted in Figure 1 is intended for tilting the driver's cab of a vehicle, in particular of a lorry. Cabs of this type are usually arranged on the chassis of the vehicle and are tiltably connected to the chassis via hinge means. The hinge means are designed in such a way that the cab can tilt between a driving position, in which the vehicle can be driven, and a tilted position, usually a tilted-forward position, in which, for example, maintenance work can be carried out on the vehicle, in particular on its engine which is situated completely or partially beneath the cab.

Furthermore, vehicles of this type are usually provided with cab-support means which support the cab in the driving position, in such a manner that, in the driving position, the cab can spring up and down with respect to the chassis, in order in this way to increase driver comfort.

The cylinder 1 comprises a cylinder housing 2 in which there is a cylinder space 3 in which a piston/piston rod assembly can move in a reciprocating manner. The piston/piston rod assembly comprises a piston 4 and piston rod 5 which is securely connected thereto. Around the piston 4 there is a sealing ring 6, while the piston rod 5 projects out of the cylinder housing 2 through a seal 7. The cylinder 1 is usually arranged between the cab and the chassis of the vehicle, the cylinder housing 2 usually being pivotably connected to the chassis and the end of the piston rod 5 usually being pivotably connected to the cab.

In the cylinder space 3, the piston/piston rod assembly forms a pulling chamber 8 which, when hydraulic fluid is supplied to it, pulls in the piston/piston rod assembly, and a pushing chamber 9 which, when hydraulic fluid is supplied to it, pushes out the piston/piston rod assembly. An associated pull connection 10 and push connection 11 are provided for the pulling chamber 8 and the pushing chamber 9, respectively.

The pull connection 10 can be connected, via a hydraulic line, to a pump for supplying pressurized hydraulic fluid or to an essentially unpressurized reservoir for hydraulic fluid. A suction-blocking device may be incorporated in this line, in order to prevent fluid from being sucked in unhindered via this line.

The pushing connection 11 can be connected to the pump or the reservoir via another line. A suction-blocking device may also be provided in this line.

The tilting cylinder 1 also comprises a bypass channel 15 with two ports which open into the cylinder space 3 and are denoted by 16 and 17.

The bypass channel 15 connects the pulling chamber 8 to the pushing chamber 9 when the piston 4 is situated between the two ports 16, 17 of the channel 15, which is the case in a position of the piston/piston rod assembly which is associated with the driving position of the cab. When the vehicle is being driven, the pump is out of action and the tilting device functions in its "lost-motion mode".

A nonreturn valve assembly is indicated by dashed lines representing its contour in Figure 1. The assembly in fact comprises two nonreturn valves, namely a first nonreturn valve 20, which is arranged between the pushing chamber 9 and associated push connection 11, and a second nonreturn valve 21, which is arranged in the bypass channel 15.

As is clear even from the diagrammatic illustration in Figure 1, the valves 20, 21 make use of a single common valve body, in this case ball 22.

The operation and design of the valve assembly will now be explained in more detail, partly with reference to Figure 2.

The valve assembly has a housing, which is preferably integral with the cylinder housing 2, as shown here. A first bore 25 with a first diameter is formed in the housing 2 from the outside, in line with which bore a second bore 26 with a second diameter which is smaller than the first diameter is formed. From the opposite side, a third bore 27 with a larger diameter than the second bore 26 is formed in the housing 2.

The shoulder 28 between the first bore 25 and the second bore 26 forms the seat 28 of the first nonreturn valve 21. Furthermore, in the first bore 25 there is an annular body 29, of which that side which faces towards the seat 28 forms the seat 31, which lies around the passage 30 in the body 29, of the second nonreturn valve 21. In this example, a sealing ring is arranged around the body 29. The body 29 is held in place on account of a hollow clamping pin 34 provided with a longitudinal slot 33 being fitted into the passage 30. The other end of the clamping pin 34 rests against a stopper 35 which is screwed into the end of the bore 25. It will be clear that the connection between the passage 30 and the channel 36 may also be produced in other ways. For example, it is possible for the body 29 to bear against the stopped 35 and for the body 29 to be provided with one or more transverse bores at the location of the channel 36.

The ball 22, which can move in a reciprocating manner, is situated in the chamber between the seat 28 and the seat 31.

On the side remote from the ball 22, the passage 30 is in communication with that part 36 of the bypass channel 15 which leads to the port 16. The space between the two seats 28, 31 is in communication with that part 37 of the bypass channel 15 which leads to the port 17 and also serves as part of the channel between the pushing chamber 9 and the push connection 11.

The ball 22 has a smaller diameter than the first bore 25, so that hydraulic fluid can flow past the ball 22. The fact that no seal is required between the ball (or a valve body designed in some other way), on the one hand, and the housing, on the other hand, represents a further advantage of the invention over the abovementioned prior art.

In the third bore 27 there is a piston 40 with an actuating projection 41 which projects into the second bore 26 and has a length which is such that it can hold the ball 22 off the seat 28 if the piston 40 is pushed, by hydraulic pressure acting on opening surface 42, towards its position shown in Figure 2.

The bore 26 is adjoined by a channel 44 which is in communication with the push connection 11 of the cylinder 1. The projection 41 has a smaller diameter than the second bore 26.

The end of the third bore 27 is closed off by a stopper 45, and between the stopper 45 and the piston 40 a channel 46 opens out into the third bore 27, which channel 46 is in communication with the pull connection 10 of the cylinder 1. A sealing ring 47 lies around the piston 40.

The valve assembly of the cylinder 1 operates as follows.

If the cabin is to be tilted forwards out of the driving position, pressurized hydraulic fluid is supplied to the push connection 11 of the cylinder 1. Hydraulic fluid can flow out via the pull connection 10.

As a result of pressurized hydraulic fluid being supplied to the push connection 11, the ball 22 is moved or held away from the seat 28 and is pushed against the seat 30. As a result, therefore, that part 36 of the bypass channel 15 which leads to the pulling chamber 8 is closed off. The hydraulic fluid then enters the pushing chamber 9 via the channel part 37 and the piston rod 4 of the cylinder 1 is pushed out.

When the piston 4 is situated above the port 16, the holding function is ensured, since the ball 22 will then bear against the seat 28 and will prevent hydraulic fluid from flowing out of the pushing chamber 9.

When the piston rod 5 is retracted in order for the cab to be tilted back, pressurized hydraulic fluid is supplied to the pull connection 10. In the process, the projection 41 will press and hold the ball 22 off the seat 28, so that fluid can flow out of the pushing chamber 9. As soon as the port 16 comes into communication with the pulling chamber 8, it can be understood that the cab completes the last part of the tilting into the driving position by a type of dropping motion. This is often desirable in order to ensure that the cab comes into engagement with a cab lock which is intended to hold the cab in the driving position. To obtain correct engagement with the lock, it is frequently necessary for the cab to have a certain velocity. This drop cannot be blocked by the nonreturn valve 20. This is because the hydraulic pressure in the pushing chamber 9 also passes into the pulling chamber 8 via the channel 15 and, from there, reaches the line 10. If pressure is built up in this line 10, for example because the pump is preventing flow back to the reservoir, the piston 40 will hold the ball 20 off its seat 28. This is therefore what also happens if the supply of hydraulic fluid to the line 10 by means of the pump is stopped.

Arranging the seats 28, 30 opposite one another allows a simple design of the nonreturn valve assembly.

## Claims

1. Hydraulic tilting device for tilting a cab of a vehicle between a driving position and a tilted position or for actuating components of a covering roof assembly of a vehicle, which tilting device comprises:
- a reservoir for hydraulic fluid,
- a pump with at least one pressure port for delivering pressurized hydraulic fluid,
- a double-acting hydraulic tilting cylinder (1) for tilting the cab or actuating the component of the covering roof assembly, comprising a cylinder housing (2) in which there is a cylinder space (3) in which a piston/piston rod assembly (4, 5) can move in a reciprocating manner, the piston rod (5) of which projects out of the cylinder housing, which piston/piston rod assembly in the cylinder space forms a pulling chamber (8) which, when hydraulic fluid is supplied to it, pulls in the piston/piston rod assembly, and a pushing chamber (9) which, when hydraulic fluid is supplied to it, pushes out the piston/piston rod assembly, an associated pull and push connection (10, 11) being provided for the pulling and pushing chamber, respectively, which connections can optionally be connected to the pressure port of the pump and to the reservoir, and a bypass channel (15) also being provided, with ports (16, 17) which open out in the cylinder space, which bypass channel (15) forms a connection between the pulling chamber (8) and the pushing chamber (9) if one port thereof opens out in the pulling chamber and the other port opens out in the pushing chamber, which tilting device furthermore has a nonreturn valve assembly, comprising:
- a first nonreturn valve (20), which is arranged between the pushing chamber (9) and the associated push connection (11) and has a movable valve body (22) which can bear in a sealed manner against an associated first seat (28), which first nonreturn valve (20) closes in the direction of the pushing chamber (9) towards the push connection (11) and which first nonreturn valve (20) furthermore comprises hydraulic actuating means which act on the movable valve body and open the first nonreturn valve when pressurized hydraulic fluid is supplied to the pull connection, and
- a second nonreturn valve (21), which is arranged in the bypass channel (15) and has an associated movable valve body (22) which can bear in a sealed manner against an associated second seat (31) and can thus close off the connection via the bypass channel from the pushing chamber (9) to the pulling chamber (8),
**characterized in that** the seat (28) of the first nonreturn valve (20) and the seat (31) of the second nonreturn valve (21) adjoin a common chamber (25), in which chamber (25) a single, movable, common valve body (22), for example a ball, is accommodated, which common valve body (22), in a first position, bears in a sealed manner against the first seat (28) and, in a second position, bears in a sealed manner against the second seat (31).

2. Hydraulic tilting device according to claim 1, in which the seat (28) of the first nonreturn valve (20) and the seat (31) of the second nonreturn valve (21) are arranged at opposite axial ends of the chamber.

3. Hydraulic tilting device according to one or more of the preceding claims, in which a first bore (25) with a first diameter is formed from the outside in the housing (2) of the nonreturn valves, in line with which first bore a second bore (26) with a second diameter which is smaller than the first diameter is formed, a shoulder (28) between the first and second bores forming the seat for the first nonreturn valve, and a body (29) being positioned in the first bore, which body, at a distance from and opposite the seat (28) of the first nonreturn valve, forms the seat (31) of the second nonreturn valve, a valve body (22) which can move in a reciprocating manner being provided in the first bore between the two seats.

4. Hydraulic tilting device according to one or more of the preceding claims, in which the housing (2) of the nonreturn valves is integral with the housing of the tilting cylinder.

5. Hydraulic tilting device according to one or more of the preceding claims, in which a single channel (37), which leads to the pushing chamber, is connected to the first bore between the two seats.

6. A hydraulic tilting device according to claim 1 comprising a valve assembly (20, 21) comprising a housing (2) in which there is the chamber (25) which chamber has a peripheral wall and axial ends, the housing being provided, at one axial end, with a first passage (26) which is connected to the chamber and, opposite this passage, at the other axial end, being provided with a second passage (30) which is connected to the chamber, the housing being provided, around the first and second passages, with the associated first seat (28) and second seat (31), respectively, the single valve body (22) being accommodated in the chamber so that it can move in a reciprocating manner, which valve body is such that liquid can pass between the peripheral wall and the valve body, the housing furthermore being provided with a third passage (37), which is connected to the chamber at the peripheral wall, **characterized in that** the valve assembly is also provided, at the first and/or the second passage, with a hydraulically movable piston (40) and a pin (41) connected thereto, which pin fits into the corresponding passage and can move between a retracted position, in which the valve body can bear in a sealed manner against the seat associated with the passage, and an active position, in which the pin holds the valve body away from the seat.

7. Vehicle comprising a tiltable cab, a chassis and hinge means which connect the cab to the chassis, the cab being tiltable through an angle with respect to the chassis, about a hinge axis which is defined by the hinge means, between a driving position and a tilted position, and a hydraulic tilting device according to one or more of the preceding claims being provided for tilting the cab.

## Patentansprüche

1. Hydraulische Schwenkvorrichtung zum Verschwenken einer Kabine eines Fahrzeugs zwischen einer Fahrposition und einer geschwenkten Position oder zum Betätigen von Komponenten einer Dachanordnung eines Fahrzeugs, wobei die Schwenkvorrichtung aufweist:
- ein Reservoir für ein Hydraulikmittel,
- eine Pumpe mit wenigstens einem Druckanschluß, um unter Druck stehendes Hydraulikmittel zu liefern,
- einen doppelt wirkenden, hydraulischen Schwenkzylinder (1), um die Kabine zu schwenken oder die Komponente der Dachanordnung zu betätigen, mit einem Zylindergehäuse (2), in welchem ein Zylinderraum (3) vorgesehen ist, in dem sich eine Kolben/Kolbenstangen-Anordung (4, 5) hin und herbewegen kann, deren Kolbenstange (5) aus dem Zylindergehäuse hervorsteht, wobei die Kolben/Kolben-stangenanordnung in dem Zylinderraum eine Zugkammer (8), welche, wenn ihr Hydraulikmittel zugeführt wird, an der Kolben/Kolbenstangen-Anordnung zieht, und eine Schubkammer (9), welche, wenn ihr Hydraulikmittel zugeführt wird, die Kolben/Kolben-stangen-Anordnung nach außen schiebt, bildet, wobei ein zugehöriger Zug- und Schubanschluß (10, 11) für die Zug- und Schubkammer jeweils vorgesehen sind, wobei die Anschlüsse optional mit dem Druckanschluß der Pumpe und dem Reservoir verbunden werden können, und ein Bypasskanal (15) mit Öffnungen (16, 17) vorgesehen ist, die in den Zylinderraum münden, wobei der Bypasskanal (15) eine Verbindung zwischen der Zugkammer (8) und der Schubkammer (9) bildet, wenn eine der Öffnungen in die Zugkammer öffnet und die andere Öffnung in die Schubkammer öffnet, wobei die Schwenkvorrichtung weiterhin eine Rückschlagventilanordnung aufweist, mit:
- einem ersten Rückschlagventil (20), das zwischen der Schubkammer (9) und dem zugehörigen Schubanschluß (11) vorgesehen ist und einen bewegbaren Ventilkörper (22) hat, welcher in einer abgedichteten Weise an einem zugehörigen ersten Sitz (28) in Anlage kommt, wobei das erste Rückschlagventil (20) in der Richtung von der Schubkammer (9) hin zu dem Schubanschluß (11) schließt und wobei das erste Rückschlagventil (20) weiterhin hydraulische Betätigungsmittel aufweist, die auf den bewegbaren Ventilkörper wirken und das erste Rückschlagventil öffnen, wenn unter Druck stehendes Hydraulikmittel dem Zuganschluß zugeführt wird, und
- einem zweiten Rückschlagventil (21), welches in dem Bypasskanal (15) angeordnet ist und einen zugehörigen bewegbaren Ventilkörper (22) aufweist, der in einer dichtenden Weise an einem zugehörigen zweiten Sitz (31) in Anlage kommt und so die Verbindung über den Bypasskanal von der Schubkammer (9) zu der Zugkammer (8) schließen kann,
**dadurch gekennzeichnet, daß** der Sitz (28) des ersten Rückschlagventils (20) und der Sitz (31) des zweiten Rückschlagventils (21) neben einer gemeinsamen Kammer (25) liegen, in welcher Kammer (25) ein einziger, bewegbarer und gemeinsamer Ventilkörper (22) wie beispielsweise eine Kugel untergebracht ist, wobei der gemeinsame Ventilkörper (22) in einer ersten Position in einer dichtenden Weise an dem ersten Sitz (28) anliegt und in einer zweiten Position in einer dichtenden Weise an dem zweiten Sitz (31) anliegt.

2. Hydraulische Schwenkvorrichtung nach Anspruch 1, in welcher der Sitz (28) des ersten Rückschlagventils (20) und der Sitz (31) des zweiten Rückschlagventils (21) an gegenüberliegenden axialen Enden der Kammer angeordnet sind.

3. Hydraulische Schwenkvorrichtung nach einem oder mehreren der vorhergehenden Ansprüche, in welcher eine erste Bohrung (25) mit einem ersten Durchmesser von außen in das Gehäuse (2) der Rückschlagventile eingebracht ist, wobei fluchtend zu der ersten Bohrung eine zweite Bohrung (26) mit einem zweiten Durchmesser, der kleiner als der erste Durchmesser ist, ausgebildet ist, eine Schulter (28) zwischen den ersten und zweiten Bohrungen den Sitz für das erste Rückschlagventil bildet, und ein Körper (29) in der ersten Bohrung positioniert ist, wobei der Körper beabstandet von dem Sitz (28) des ersten Rückschlagventils gegenüberliegend und beabstandet von diesem den Sitz (31) des zweiten Rückschlagventils bildet, wobei ein Ventilkörper (22), der sich in einer hingehenden Weise bewegen kann, in der ersten Bohrung zwischen den beiden Sitzen vorgesehen ist.

4. Hydraulische Schwenkvorrichtung nach einem oder mehreren der vorherigen Ansprüche, in welcher das Gehäuse (2) der Rückschlagventile integral mit dem Gehäuse des Schwenkzylinders ausgebildet ist.

5. Hydraulische Schwenkvorrichtung nach einem oder mehreren der vorhergehenden Ansprüche, in welcher ein einziger Kanal (37), welcher zu der Schubkammer führt, mit der ersten Bohrung zwischen den beiden Sitzen verbunden ist.

6. Hydraulische Schwenkvorrichtung nach Anspruch 1 mit einer Ventilanordnung (20, 21) mit einem Gehäuse (2), in welchem sich die Kammer (25) befindet, wobei die Kammer eine Umfangswandung und axiale Enden hat,
wobei das Gehäuse an einem axialen Ende mit einem ersten Kanal (26) versehen ist, welcher mit der Kammer verbunden ist und gegenüberliegend von diesem Kanal an dem anderen axialen Ende mit einem zweiten Kanal (30) versehen ist, welcher mit der Kammer verbunden ist, wobei das Gehäuse um die ersten und zweiten Kanäle herum mit dem zugehörigen ersten Sitz (28) und zweiten Sitz (31) jeweils versehen sind,
wobei der erste Ventilkörper (22) in der Kammer untergebracht ist, so daß er sich hin und herbewegen kann, wobei der Ventilkörper so ist, daß Flüssigkeit zwischen der Umfangswand und dem Ventilkörper passieren kann, wobei das Gehäuse weiterhin mit einem dritten Kanal (37) versehen ist, der mit der Kammer an der Umfangswand verbunden ist, **dadurch gekennzeichnet, daß** die Ventilanordnung auch an dem ersten und/oder dem zweiten Kanal mit einem hydraulisch bewegbaren Kolben (40) und einem damit verbundenen Zapfen (41) versehen ist, wobei der Zapfen in den entsprechenden Kanal paßt und sich zwischen einer zurückgezogenen Position, in welcher der Ventilkörper in einer abdichtenden Weise an dem Sitz, welcher dem Kanal zugeordnet ist, in Anlage kommen kann, und einer aktiven Position, in welcher der Zapfen den Ventilkörper von dem Sitz weg hält, bewegen kann.

7. Fahrzeug mit einer schwenkbaren Kabine, einem Chassis und Gelenkmitteln, welche die Kabine mit dem Chassis verbinden, wobei die Kabine um einen Winkel gegenüber dem Chassis um eine Schwenkachse, welche durch die Gelenkmittel definiert ist, zwischen einer Fahrposition und einer geschwenkten Position verschwenkbar ist, und wobei eine hydraulische Schwenkvorrichtung nach einem oder mehreren der vorherigen Ansprüche zum Schwenken der Kabine vorgesehen ist.

## Revendications

1. Dispositif hydraulique d'inclinaison destiné à incliner une cabine d'un véhicule entre une position de conduite et une position inclinée ou destiné à actionner des composants d'un ensemble de toit couvrant d'un véhicule, ledit dispositif d'inclinaison comprend :
- un réservoir pour un fluide hydraulique,
- une pompe comportant au moins un orifice de pression destinée à délivrer du fluide hydraulique mis sous pression,
- un vérin d'inclinaison hydraulique à double action (1) destiné à incliner la cabine ou à actionner le composant de l'ensemble de toit couvrant, comprenant un corps de vérin (2) dans lequel se trouve un espace pour vérin (3), dans lequel un ensemble piston/tige de piston (4, 5) peut se déplacer selon un mouvement de va-et-vient, dont la tige de piston (5) dépasse du corps de vérin, lequel ensemble piston/tige de piston dans l'espace pour vérin forme une chambre de traction (8) qui, lorsque du fluide hydraulique y est fourni, fait rentrer l'ensemble piston/tige de piston, et une chambre de poussée (9) qui, lorsque du fluide hydraulique y est fourni, fait sortir l'ensemble piston/tige de piston, une liaison de traction et une liaison de poussée associées (10, 11) étant prévues pour la chambre de traction et la chambre de poussée, respectivement, lesquelles liaisons peuvent être optionnellement raccordées à l'orifice de pression de la pompe et au réservoir, et un canal de dérivation (15) étant également prévu, comportant des orifices (16, 17) qui s'ouvrent dans l'espace pour vérin, lequel canal de dérivation (15) forme un raccordement entre la chambre de traction (8) et la chambre de poussée (9) si un de ses orifices s'ouvre dans la chambre de traction et l'autre orifice s'ouvre dans la chambre de poussée, lequel dispositif d'inclinaison comporte en outre un ensemble de clapets de non-retour comprenant :
- un premier clapet de non-retour (20), qui est agencé entre la chambre de poussée (9) et la liaison de poussée associée (11) et comporte un corps de clapet mobile (22) qui peut porter d'une manière étanche contre un premier siège associé (28), lequel premier clapet de non-retour (20) se ferme dans le sens de la chambre de poussée (9) vers la liaison de poussée (11) et lequel premier clapet de non-retour (20) comporte en outre un moyen d'actionnement hydraulique qui agit sur le corps de clapet mobile et ouvre le premier clapet de non-retour lorsque du fluide hydraulique sous pression est fourni à la liaison de traction, et
- un second clapet de non-retour (21), qui est agencé dans le canal de dérivation (15) et comporte un corps de clapet mobile associé (22) qui peut porter d'une manière étanche contre un second siège associé (31) et peut donc fermer la liaison, par l'intermédiaire du canal de dérivation, de la chambre de poussée (9) à la chambre de traction (8),
**caractérisé en ce que** le siège (28) du premier clapet de non-retour (20) et le siège (31) du second clapet de non-retour (21) sont contigus à une chambre commune (25), dans laquelle chambre (25), un seul corps de clapet commun mobile (22), par exemple une bille, est logé, lequel corps de clapet commun (22), dans une première position, porte d'une manière étanche contre le premier siège (28) et, dans une seconde position, porte d'une manière étanche contre le second siège (31).

2. Dispositif d'inclinaison hydraulique selon la revendication 1, dans lequel le siège (28) du premier clapet de non-retour (20) et le siège (31) du second clapet de non-retour (21) sont agencés à des extrémités axiales opposées de la chambre.

3. Dispositif d'inclinaison hydraulique selon l'une ou plusieurs des revendications précédentes, dans lequel un premier alésage (25), d'un premier diamètre, est formé depuis l'extérieur dans le boîtier (2) des clapets de non-retour, aligné avec ce premier alésage, un second alésage (26), d'un second diamètre, qui est plus petit que le premier diamètre, est formé, un épaulement (28) entre les premier et second alésages forme le siège pour le premier clapet de non-retour, et un corps (29) est positionné dans le premier alésage, lequel corps, à une distance du siège (28) du premier clapet de non-retour, et en face de celui-ci, forme le siège (31) du second clapet de non-retour, un corps de clapet (22) qui peut se déplacer selon un mouvement de va-et-vient étant prévu dans le premier alésage entre les deux sièges.

4. Dispositif d'inclinaison hydraulique selon l'une ou plusieurs des revendications précédentes, dans lequel le boîtier (2) des clapets de non-retour est solidaire du corps du vérin d'inclinaison.

5. Dispositif d'inclinaison hydraulique selon l'une ou plusieurs des revendications précédentes, dans lequel un seul canal (37), qui conduit à la chambre de poussée, est relié au premier alésage entre les deux sièges.

6. Dispositif d'inclinaison hydraulique selon la revendication 1, comprenant un ensemble de clapets (20, 21) comprenant un boîtier (2) dans lequel se trouve la chambre (25), laquelle chambre présente une paroi périphérique et des extrémités axiales, le boîtier étant doté, à une première extrémité axiale, d'un premier passage (26) qui est relié à la chambre et, à l'opposé de ce passage, à l'autre extrémité axiale, d'un second passage (30) qui est relié à la chambre, le boîtier étant doté, autour des premier et second passages, du premier siège (28) et du second siège (31) associés, respectivement, le corps de clapet unique (22) étant logé dans la chambre de sorte qu'il peut se déplacer selon un mouvement de va-et-vient, lequel corps de clapet est tel que du liquide peut passer entre la paroi périphérique et le corps de clapet, le boîtier étant en outre doté d'un troisième passage (37), qui est relié à la chambre, à la paroi périphérique, **caractérisé en ce que** l'ensemble de clapets est également muni, au niveau des premier et/ou second passages, d'un piston mobile hydrauliquement (40) et d'une broche (41) reliée à celui-ci, laquelle broche s'ajuste dans le passage correspondant et peut se déplacer entre une position rétractée, dans laquelle le corps de clapet peut porter d'une manière étanche contre le siège associé au passage, et une position active dans laquelle la broche maintient le corps de clapet à l'écart du siège.

7. Véhicule comprenant une cabine inclinable, un châssis et un moyen d'articulation qui relie la cabine au châssis, la cabine étant inclinable d'un angle par rapport au châssis, autour d'un axe d'articulation, qui est défini par le moyen d'articulation, entre une position de conduite et une position inclinée, et un dispositif d'inclinaison hydraulique selon l'une ou plusieurs des revendications précédentes étant prévu pour incliner la cabine.
